(19) Europäisches Patentamt
European Patent Office
Office européen des brevets

(11) EP 1 927 396 A1

(12) **EUROPÄISCHE PATENTANMELDUNG**

(43) Veröffentlichungstag:
04.06.2008 Patentblatt 2008/23

(51) Int Cl.:
*B01J 19/30* (2006.01)

(21) Anmeldenummer: 06024922.4

(22) Anmeldetag: 01.12.2006

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK RS

(71) Anmelder: Vereinigte Füllkörper-Fabriken GmbH
& Co. KG
56235 Ransbach-Baumbach (DE)

(72) Erfinder:
• Schwämmlein, Kurt, Dr.
55545 Bad Kreuznach (DE)
• Kind, Hanno
56427 Siershahn (DE)

(74) Vertreter: Quermann, Helmut et al
Unter den Eichen 7
65195 Wiesbaden (DE)

(54) **Füllkörper für den Stoff- und/oder Wärmeaustausch**

(57) Es wird ein Füllkörper (1) für den Stoff- und/oder Wärmeaustausch, insbesondere für Stoff- und/oder Wärmeaustauschkolonnen, die von einer Gas- und/oder Flüssigkeitsströmung durchsetzt werden, vorgeschlagen.

Der Füllkörper (1) ist eine Füllkörpereinheit, die durch eine Überstruktur aus mindestens zwei miteinander verbundenen Teilfüllkörpern (2, 3, 4) gebildet ist. Der Füllkörper weist Wandungsabschnitte (5, 6, 9, 9a) unterschiedlicher Dicke auf.

FIG.2

**Beschreibung**

Es ist bekannt, dass Füllkörper verschiedener Ausführungsformen als regellose Schüttungen in Kolonnen, Reaktoren und anderen Behältern für den Stoff- und Wärmeaustausch vielfach eingesetzt werden, wobei thermische, chemische oder physikalische Verfahren wie Absorption, Desorption, Rektifikation, Extraktion und andere Trennprozesse betrieben werden, bei denen verschiedene Phasen bzw. Medien, zum Beispiel gasförmig/flüssig, mit möglichst geringem Aufwand effektiv und innig miteinander in Kontakt gebracht werden sollen. Die Füllkörper vergrößern die Oberfläche in dem von ihnen ausgefüllten Volumen und intensivieren dadurch den Stoff- bzw. Wärmeaustausch zwischen den verschiedenen Phasen bzw. Medien innerhalb dieses Volumens. Die Phasengrenzfläche für den Stoffübergang stimmt in der Regel nicht exakt mit der geometrischen Füllkörperoberfläche überein, sondern ist vielmehr die Summe aus der während des Prozesses benetzten Füllkörperoberfläche und der Oberflächensumme aller sich im Füllkörperbett bildenden Tropfen. Der Umfang der Benetzung der Füllkörperoberfläche hängt u.a. von den Flüssigkeitseigenschaften, den Füllkörpermaterialeigenschaften, der Berieselungsdichte und von weiteren Faktoren ab. Je größer die Phasengrenzfläche ist, desto größer ist - unter sonst gleichen Bedingungen - der Stoff- bzw. Wärmeaustausch. Das Füllkörperbett weist gegenüber der Strömung der Phasen einen bestimmten Druckverlust auf, der vom Gasbelastungsfaktor, der Berieselungsdichte, dem Füllkörpertyp, der Füllkörpergröße und weiteren Parametern abhängt. Wünschenswert ist ein möglichst hoher Stoff- bzw. Wärmeaustausch in einem möglichst kleinen Volumen unter möglichst geringem Druckverlust.

Bekannt ist weiterhin, dass der Übergang von einem Füllkörper mit geschlossener Oberfläche auf einen Füllkörper, dessen Oberfläche im weitesten Sinne Öffnungen bzw. Durchbrüche aufweist, zu deutlichen Verbesserungen hinsichtlich der Senkung des Druckverlustes über die Füllkörperschüttung führt. Bei geeigneter Form ergeben sich dabei keine nennenswerten Leistungsminderungen bezüglich Stoff- bzw. Wärmeaustausch. Allerdings muss bei manchen Ausführungsformen bzw. in manchen Fällen besonders auf eine gute bzw. gleichmäßige Vorverteilung der Medien - in der Regel der Flüssigkeit - durch Auswahl eines geeigneten Flüssigkeitsverteilers - zum Beispiel mit einer geeigneten Anzahl und Verteilung von Tropfstellen - geachtet werden, insbesondere wenn es sich um größere Kolonnendurchmesser handelt.

In einer regellosen Schüttung werden die Füllkörper und deren meist mit einer gedachten Vorzugsrichtung parallel verlaufenden Füllkörperachsen nach einer technischen Befüllung in der Praxis nahezu regellos nach dem Zufallsprinzip über alle möglichen Ausrichtungen in Bezug zu der Kolonnenachse bzw. Behälterachse verteilt sein, sofern die Füllkörper nicht extrem flach sind und das Nennmaß des betreffenden Füllkörpers entsprechend klein gegenüber dem Kolonnendurchmesser ist. Eine signifikante Bevorzugung der parallelen oder quasi-parallelen Ausrichtung der Füllkörperachse in Bezug zu der Kolonnenachse - welches einer strömungsgünstigen Ausrichtung gegenüber einer regellosen Anordnung entspricht - tritt unter einem praktisch vertretbaren Befüllungsvorgang zumeist nicht in einem ausreichend nennenswertem Umfange auf.

In diesem Zusammenhang ist eine Vielzahl von im weitesten Sinne aus Streifen aufgebauter Füllkörper bekannt. Diese sind beispielsweise beschrieben in DE-PS 853 159, EP 0 143 902 A1, US 4 575 435, DE-AS 1 129 931, US 4 303 599, DE 295 12 080 U1, EP 0 764 462 B1, US 4 041 113, US 4 576 763, US 5 411 681, US 4 105 724 und EP 0 697 246 B1. In sinnfälliger Weise lässt sich bei diesen bekannten Ausführungsformen im weitesten Sinne eine Füllkörperachse so definieren, wobei diese senkrecht zu den Normalen auf dem bestimmenden Hauptteil der wesentlichen Oberflächenelemente dieser bekannten Füllkörper steht. Diese wesentlichen Oberflächenelemente können gedanklich als Streifen aufgefasst werden, die im Falle von zum Beispiel Metall als Füllkörperwerkstoff aus einem ehemals ebenen rechteckigen Blechstück mit geeigneten Einschnitten durch Umformvorgänge hervorgegangen sind. Die Streifen haben bekanntlich zwei aufeinander senkrecht stehende Seiten und können entlang ihrer einen Seite - zumeist längsseitig - gebogen bzw. verschiedenartig gekrümmt sein, während die andere Seite - also die zur ersteren senkrecht stehende Seite - immer ein gerades Stück ist bzw. ein gerades Stück mit einer kleinen Nut oder mit einer dazu rechtwinkligen Ansatzfläche wie eine Art Flanschstück jeweils zur mechanischen Verstärkung ist.

Ein weiterer Füllkörper ist aus der WO 02/40148 A2 bekannt. Dieser weist eine polygone Gestalt auf und besitzt mehrere gebogene Streifen.

In "Chem Technol Biotechnol 78:142-145 (online:2003), www.paper.edu.cn" ist unter dem Titel "Intensification of random packing via CFD simulation, PIV measurement and traditional experiments" ein Füllkörper beschrieben, mit einem geringen Höhen-Durchmesserverhältnis von 0,2 - 0,3. Durch diesen soll erreicht werden, dass die meisten sogenannten Miniringe sich von alleine unter einem Winkel von weniger als 30° zur Horizontalen anordnen, wenn sie in Kolonnen geschüttet werden.

In der DE 197 15 704 C2 ist ein Füllkörper beschrieben, bei dem der Durchmesser des Füllkörpers größer als dessen Höhe ist, wobei das Verhältnis von Höhe zu dem Durchmesser vorzugsweise 1:2 beträgt.

Eine Vielzahl von Füllkörpern bestehen aus Metall und sind insbesondere aus einem Band hergestellt. Es wird das Band - im technischen Rahmen konstanter Dicke bzw. konstanter Wandstärke - geschnitten, so dass sich ein Blech mit einer bestimmten Länge, Breite und Wandstärke ergibt. Dann werden Einschnitte in das Blech eingebracht, zur Bildung von Streifenabschnitten. Diese Einschnitte sind jeweils im Bereich deren beiden Enden geschlossen. Zwischen benachbarten, derart eingebrachten Einschnitten lässt sich jeweils ein Streifenabschnitt in Bogenform formen. Das derart umgeformte Band wird dann in die gewünschte Form gebracht, sei es, wie bei der US 4 576 763 in eine im Wesentlichen halbkreisförmige Form, mit den hiervon ausgehenden Ausbuchtungen, eine längliche Form gemäß der EP 0 764 462 B1 mit den hiervon ausgehenden Ausbuchtungen, eine zylindrische Form gemäß der US 4 576 763 mit den hiervon ausgehenden Ausbuchtungen. Bei all diesen Füllkörpern ist die Form des Füllkörpers stark an die Vorgabe der Geometrie des Bleches gebunden. Es ist demzufolge nicht möglich Füllkörper herzustellen, die grundsätzlich von der Grundform des Blechs abweichen, sofern man von der Möglichkeit der Formung der diversen Bogen absieht. Wie schon vorstehend beschrieben, ist das Verhältnis Höhe des Füllkörpers zu seinem formalen Füllkörperdurchmesser von besonderer Bedeutung für eine bevorzugte Ausrichtung des Füllkörpers, bei einer technischen Kolonnenbefüllung.

Aufgabe der vorliegenden Erfindung ist es, einen kostengünstig herstellbaren Füllkörper mit geringem Druckverlust und mit ausreichenden Flüssigkeitsquerverteileigenschaften - jeweils über das ganze Füllkörperbett betrachtet - zu schaffen, wobei gewährleistet sein soll, dass sich dieser Typ Füllkörper bei einer technischen Kolonnenbefüllung so bevorzugt ausrichtet, dass einerseits ein außergewöhnlich niedriger Druckverlust, und andererseits eine ausreichende Raumerfüllung mit benetzbarer Füllkörperoberfläche resultiert.

Gelöst wird die Aufgabe durch einen Füllkörper für den Stoff- und/oder Wärmeaustausch, insbesondere für Stoff- und/oder Wärmeaustauschkolonnen, die von einer Gas- und/oder Flüssigkeitsströmung durchsetzt werden, wobei der Füllkörper eine Füllkörpereinheit ist, die durch eine Überstruktur aus mindestens zwei miteinander verbundenen Teilfüllkörpern gebildet ist, wobei der Füllkörper Wandungsabschnitte unterschiedlicher Dicke aufweist.

Erfindungsgemäß ist der Füllkörper somit quasi durch Teilfüllkörper gebildet, wobei jeder Teilfüllkörper, für sich alleine betrachtet, bereits einen eigenständigen, technisch einsetzbaren Füllkörper darstellt. Die Teilfüllkörper sind miteinander verbunden.

Der Füllkörper besteht vorzugsweise aus Kunststoff, insbesondere spritzfähigem oder extrusionsfähigem Kunststoff, oder aus Metall oder aus Keramik.

Auf Grund der Gestaltung des erfindungsgemäßen Körpers ergeben sich relativ dickere und relativ dünnere Wandungsabschnitte. Relativ dickere Wandungsabschnitte sind insbesondere in denjenigen Bereichen des Füllkörpers vorgesehen, in denen es auf eine besondere Festigkeit ankommt.

Durch die Ausbildung unterschiedlich dicker Wandungsabschnitte beim Füllkörper lässt sich überdies das Abtropfverhalten beeinflussen.

Insbesondere dann, wenn der Füllkörper aus Kunststoff besteht, bietet sich die Möglichkeit, diesen auf unterschiedlichste Art und Weise herzustellen, insbesondere im Spritzgussverfahren. Bei der Herstellung des Füllkörpers lassen sich auf einfache Art und Weise die Wandungsabschnitte des Füllkörpers unterschiedlicher Dicke erzeugen. Die relativ dickeren Wandungsabschnitte sind insbesondere dort am Füllkörper vorgesehen, wo nach der Herstellung des Füllkörpers Stempel oder Gestänge auf den Füllkörper einwirken, um diesen aus der Form auszuwerfen.

Die Bildung relativ dicker Wandungsabschnitte ist aber nicht auf Bereiche des Füllkörpers beschränkt, in denen Kräfte zum Auswerfen des Füllkörpers einzuleiten sind, sondern es ist gleichfalls sinnvoll, den Füllkörper an denjenigen Stellen, im Bereich derer größere Kräfte in den Füllkörper eingeleitet werden, stärker auszubilden. Hierbei ist zu berücksichtigen, dass eine Vielzahl von Füllkörpern unregelmäßig in einem Behälter angeordnet sind und demzufolge nicht unerhebliche Gewichtskräfte auf den jeweiligen Füllkörper einwirken.

Gemäß einer besonderen Ausführungsform der Erfindung ist vorgesehen, dass die Teilfüllkörper auf unterschiedlichem oder auf demselben Höhenniveau nebeneinander angeordnet sind. Insbesondere dann, wenn die Teilfüllkörper auf unterschiedlichem Höhenniveau nebeneinander angeordnet sind, ergibt sich ein besonders vorteilhaftes Ausrichten des Füllkörpers bei der technischen Kolonnenbefüllung.

Der Füllkörper ist vorzugsweise durch zwei oder drei Füllkörper gebildet, insbesondere durch zwei oder drei eine Ringstruktur aufweisende Teilfüllkörper gebildet.

Bei auf unterschiedlichem Höhenniveau angeordneten Teilfüllkörpern sind bevorzugt alle Teilfüllkörper auf unterschiedlichem Höhenniveau angeordnet.

Die Teilfüllkörper des Füllkörpers können identisch ausgebildet sein.

Bei dem erfindungsgemäßen Füllkörper sind vorzugsweise vertikal benachbarte Wandungsabschnitte relativ geringer Dicke mittels Wandungsabschnitten relativ großer Dicke miteinander verbunden. Die Verbindung benachbarter Teilfüllkörper erfolgt zweckmäßig über einen Wandungsabschnitt relativ großer Dicke. Die Verbindung kann beispielsweise derart erfolgen, dass die Teilfüllkörper nach außen gekrümmte Wandungsabschnitte aufweisen und die Teilfüllkörper im Bereich dieser Wandungsabschnitte miteinander verbunden sind. Für den Fall, dass der jeweilige Füllkörper mindestens eine Symmetrieachse, insbesondere zwei Symmetrieachsen aufweist, wird es als vorteilhaft angesehen, wenn der Füllkörper im Bereich der Symmetrieachse die relativ dickeren Wandungsabschnitte aufweist. Der jeweilige Teilfüllkörper weist insbesondere, bezogen auf seine Höhenerstreckung, mehrere übereinander angeordnete unterschiedlich ausgebogene Wandungsabschnitte auf, wobei die Wandungsabschnitte in deren seitlichen Verbindungsbereichen die relativ dickeren Wandungsabschnitte aufweisen.

Durch die genannte Gestaltung wird ein Füllkörper erzeugt, mit nebeneinander angeordneten Teilfüllkörpern, wobei unter nebeneinander angeordnet zu verstehen ist, dass die Teilfüllkörper im Wesentlichen nebeneinander angeordnet sind, weil sie sich zumindest in einem Bereich des Füllkörpers, jeweils entsprechend dem Verformungsgrad bei der Herstellung, überdecken. Demgegenüber wird unter unterschiedlichem Höhenniveau verstanden, dass benachbarte Teilfüllkörper nicht auf demselben Höhenniveau angeordnet sind, sondern diese benachbarten Teilfüllkörper sich auf unterschiedlicher Höhe, bezogen auf den jeweiligen Teilfüllkörper, befinden. Es lässt sich so, selbst dann, wenn die Teilfüllkörper auf unterschiedlichem Höhenniveau angeordnet sind, ein Füllkörper schaffen, der Teilfüllkörper aufweist und eine Struktur bildet, die ein günstiges Verhältnis von Höhe H des Füllkörpers zum formalem Füllkörperdurchmesser $\Phi$ aufweist. Dieser formale Füllkörperdurchmesser $\Phi$ errechnet sich aus $\sqrt{\dfrac{L \cdot B}{\pi}} \cdot 2$, mit L = Länge des Füllkörpers und B = Breite des Füllkörpers. Das Verhältnis $\dfrac{H}{\Phi}$ beträgt insbesondere < 0,6. Der formale Füllkörperdurchmesser berechnet sich über eine formale Gleichsetzung der größten Stirnfläche L · B eines umhüllenden Quaders mit einer Kreisfläche.

Selbstverständlich kann der Füllkörper bzw. Teilfüllkörper eine von einer geschlossenen Ringstruktur abweichende Form aufweisen. Es ist beispielsweise eine gegensinnig gerichtete U-förmige Struktur oder eine gegensinnig gerichtete kurvenförmige Struktur denkbar.

Benachbarte Teilfüllkörper sind insbesondere über einen Steg miteinander verbunden. Die Teilfüllkörper weisen insbesondere nach außen gekrümmte Bereiche auf, wobei benachbarte Teilfüllkörper in ihrem jeweils nach außen gekrümmten Bereich miteinander verbunden sind.

Der Füllkörper stellt somit eine Überstruktur aus mindestens zwei miteinander verbundenen Teilfüllkörpern dar. Jeder Teilfüllkörper stellt für sich alleine betrachtet bereits einen eigenständigen, vollwertigen Füllkörper mit günstigen Eigenschaften - zum Beispiel einem niedrigen Druckverlust - dar. Durch diese Überstruktur werden zwei oder mehrere Teilfüllkörper fest und in geordneter Weise miteinander verbunden, so dass diese sich in der Schüttung nicht unabhängig voneinander ausrichten können, der Ordnungsgrad also ansteigt. Obwohl es sich beim erfindungsgemäßen Füllkörper um einen sogenannten Schüttgutfüllkörper handelt, richtet sich der Füllkörper während der Befüllung durch diese Überstruktur bevorzugt, und zwar strömungsgünstiger als zwei voneinander unabhängige und nicht miteinander verbundene Füllkörper aus. Charakteristisch für den Füllkörper ist die versetzte Anordnung der Teilfüllkörper, dergestalt, dass die längliche bzw. flache Gesamtausführung resultiert. Hierbei beträgt das Verhältnis $\dfrac{H}{\Phi}$ des aus den Teilkörpern gebildeten Füllkörpers vorzugsweise < 0,6. Benachbarte Teilfüllkörper können demzufolge in verschiedenen Ebenen angeordnet sein, die sowohl parallel als auch zueinander geneigt sein können. Die einzelnen Streifen können in Richtung ihrer Breite V- oder U-förmig über die ganze Länge oder auch nur über einen Teil der Länge geformt sein. Die bevorzugte Form des Füllkörpers bzw. des jeweiligen Teilfüllkörpers ist annähernd rechteckig, insbesondere annähernd quadratisch.

Besteht der Füllkörper aus Kunststoff, wird er insbesondere mittels eines Werkzeugoberteils und eines Werkzeugunterteils, die entsprechend der Füllkörperform Hohlräume aufweisen, hergestellt, wobei der mittels des Verfahrens erzeugte Füllkörper bogenförmige Streifenabschnitte aufweist, und der zwischen dem Werkzeugoberteil und dem Werkzeugunterteil gebildete Hohlraum für den Füllkörper auf unterschiedlichen Höhenniveaus angeordnet ist, zur Schaffung des Füllkörpers, der aus den Teilfüllkörpern gebildet ist, die auf unterschiedlichem Höhenniveau nebeneinander angeordnet sind.

Weitere Merkmale der Erfindung sind in der Beschreibung der Figuren sowie in den Figuren selbst dargestellt, wobei bemerkt wird, dass alle Einzelmerkmale und alle Kombinationen von Einzelmerkmalen erfindungswesentlich sind.

In den Figuren ist die Erfindung anhand mehrerer Ausführungsformen sowie Modifizierungen zu diesen dargestellt, ohne hierauf beschränkt zu sein.

Es stellt dar:

Figur 1    eine erste Ausführungsform des Füllkörpers, bei dem drei Teilfüllkörper gebildet sind, die jeweils eine geschlossene Ringstruktur aufweisen,

Figur 2    den in der Figur 1 gezeigten Füllkörper, in einer Seitenansicht,

Figuren 3 und 4    eine zweite Ausführungsform des Füllkörpers, in einer Draufsicht und einer Seitenansicht,

Figuren 5 und 6    eine dritte Ausführungsform des Füllkörpers, in einer Draufsicht und einer Seitenansicht,

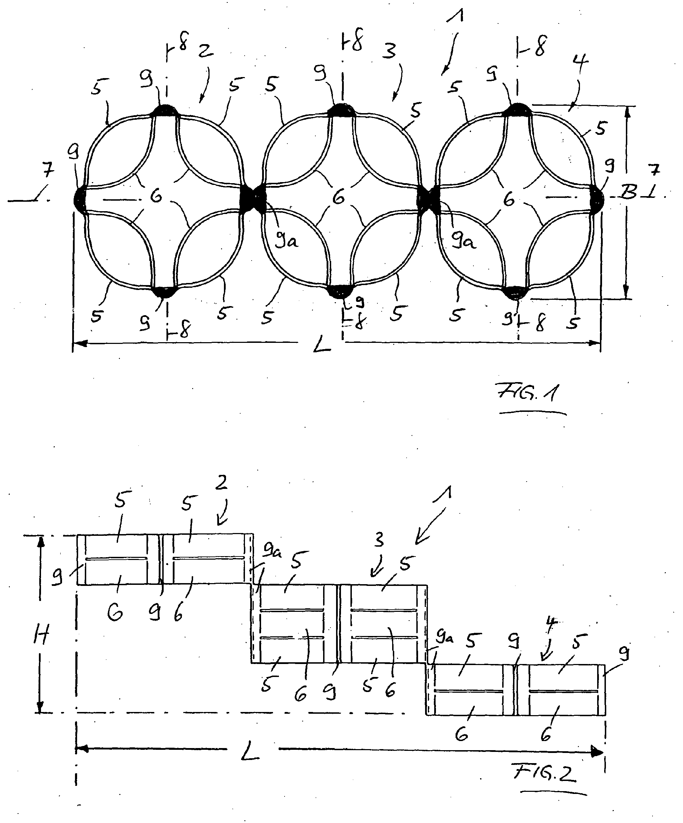

Die erste Ausführungsform nach den Figuren 1 und 2 veranschaulicht den aus Kunststoff, insbesondere aus spritzgussfähigem oder extrusionsfähigem Kunststoff bestehenden Füllkörper 1 zur Verwendung bei Stoff- und/oder Wärmeaustauschkolonnen, die von einer Gas- und/oder Flüssigkeitsströmung durchsetzt werden. Der Füllkörper 1 stellt eine Füllkörpereinheit dar, die durch eine Überstruktur aus drei miteinander verbundenen, identischen Teilfüllkörpern 2, 3, 4 gebildet ist. Die Höhe des Füllkörpers ist durch das Maß H, die Breite des Füllkörpers durch das Maß B und die Länge des Füllkörpers durch das Maß L wiedergegeben. Wie der Darstellung der Figuren 1 und 2 zu entnehmen ist, sind die Teilfüllkörper 2, 3 und 4 nebeneinander angeordnet; aus Figur 2 ergibt sich überdies, dass die Teilfüllkörper 2, 3 und 4 auf unterschiedlichem Höhenniveau angeordnet sind. So grenzt, bezogen auf die Orientierung der Figuren 1 und 2, der linke, obere Teilfüllkörper 2 unten rechts an den mittleren Teilfüllkörper 3, und zwar oben links an den Teilfüllkörper 3 und es grenzt der Teilfüllkörper 3 unten rechts an den unteren Teilfüllkörper 4, und zwar oben links an den Teilfüllkörper 4. Bezogen auf die Draufsicht gemäß Figur 1 weist jeder Teilfüllkörper 2 bzw. 3 bzw. 4. eine Ringstruktur auf. Diese Ringstruktur ist durch äußere Wandungsabschnitte 5 relativ geringer Dicke gebildet. Der jeweilige Teilfüllkörper 2 bzw. 3 bzw. 4 weist ferner innere Wandungsabschnitte 6 relativ geringer Dikke auf, die bezogen auf die Ringstruktur des jeweiligen Teilfüllkörpers nach innen gerichtet gebogen sind und erstellen die inneren Wandungsabschnitte 6 des jeweiligen Teilfüllkörpers ein kreuzförmiges Gebilde dar. Es ergibt sich somit eine Struktur des jeweiligen Teilfüllkörpers 2 bzw. 3 bzw. 4, die bezüglich der senkrecht aufeinander stehenden Achsen 7 und 8 symmetrisch ist.

Wie der Darstellung der Figur 2 zu entnehmen ist, sind die Teilfüllkörper 2 und 4 durch zwei übereinander liegende, parallel zur Längsachse des Füllkörpers 1 angeordnete Streifenanordnungen gebildet, wobei die obere Streifenanordnung die äußeren Wandungsabschnitte 5 und die untere Streifenanordnung die inneren Wandungsabschnitte 6 aufweist. Der mittlere Teilfüllkörper 3 weist drei übereinanderliegend angeordnete, sich parallel zur Längsachse des Teilfüllkörpers 1 erstreckende Streifenabschnitte auf, wobei der obere und der untere Streifenabschnitt durch die äußeren Wandungsabschnitte 5 und der mittlere Streifenabschnitt durch die inneren Wandungsabschnitte 6 gebildet ist. In dem Bereich, in dem sich, bezogen auf die vertikale Projektion des Füllkörpers 1 gemäß Figur 1, die Wandungsabschnitte 5 und 6 überlappen, ist der jeweilige Teilfüllkörper 2 bzw. 3 bzw. 4 über seine gesamte Höhe mit einem Wandungsabschnitt 9 relativ großer Dicke versehen, wobei mit 9a diejenigen Wandungsabschnitte relativ großer Dicke bezeichnet sind, im Bereich derer benachbarte Teilfüllkörper 2 und 3 bzw. 3 und 4 miteinander verbunden sind. Die Wandungsabschnitte 9 und 9a sind jeweils parallel zueinander angeordnet, und zwar parallel zu der die Höhe des Füllkörpers 1 definierenden Achse.

Unter relativ geringer Dicke der äußeren und inneren Wandungsabschnitte 6 und 6 wird insbesondere eine solche verstanden, die geeignet ist, dem Füllkörper 1, insbesondere im Bereich der Wandungsabschnitte 5 und 6 eine ausreichende Stabilität zu verleihen. Unter relativ großer Dicke der Wandungsabschnitte 9 und 9a wird eine solche verstanden, die einerseits, bezogen auf die Wandungsabschnitte 9a, eine sichere Verbindung der Teilfüllkörper 2 und 3 bzw. 3 und 4 beim Einsatz des Füllkörpers sicherstellt und überdies die Wandungsstärke der Wandungsabschnitte 9 und 9a ausreichend ist, die Kräfte aufzunehmen, die beim Auswerfen des Kunststofffüllkörpers 1 bei dessen Herstellung, insbesondere im Spritzgussverfahren, aus dem Werkzeug zu gewährleisten. Hierbei dienen die einem nicht veranschaulichten Auswurfgestänge des Werkzeugs zugewandten Stirnflächen des Füllkörpers 1, beispielsweise auf die Orientierung der Figur 2 bezogen, untere Stirnflächen der Wandungsabschnitte 9 bzw. 9a als Auflageflächen für das Auswurfgestänge. Der Füllkörper 1 wird somit nach dessen Herstellung in Richtung der Höhe des Füllkörpers 1 aus dem Werkzeug ausgeworfen.

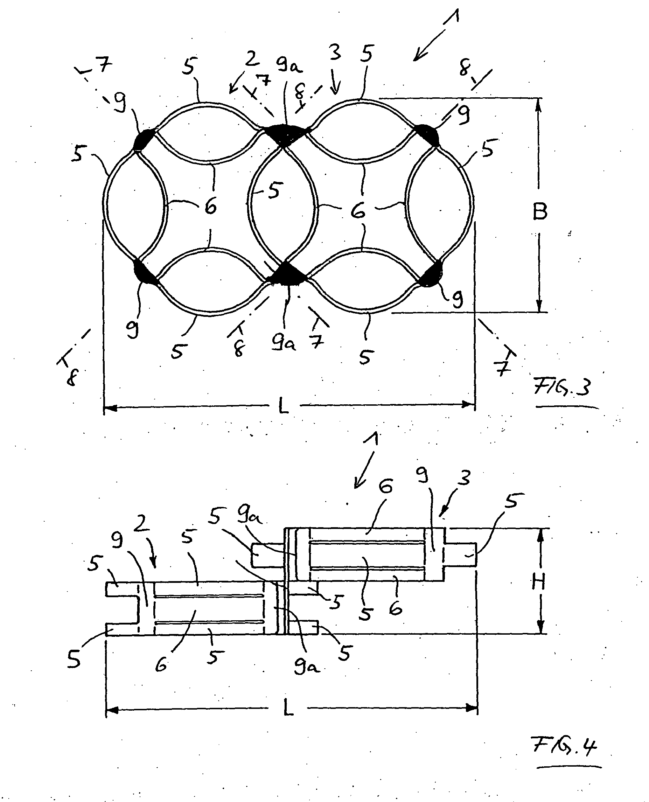

Die Figuren 3 und 4 zeigen eine bezüglich der Ausführungsform nach den Figuren 1 und 2 modifizierte Ausführungsform des Füllkörpers 1. Diejenigen Teile des Füllkörpers 1 gemäß der Ausführungsform nach den Figuren 3 und 4, die mit denjenigen Teilen des Füllkörpers 1 gemäß der Ausführungsform nach den Figuren 1 und 2 in ihrem grundsätzlichen Aufbau oder ihrer grundsätzlichen Anordnung oder Wirkungsweise übereinstimmen, sind der Einfachheit halber, um in der nachfolgenden Figurenbeschreibung Wiederholungen zu vermeiden, mit denselben Bezugsziffern bezeichnet.

Der in den Figuren 3 und 4 gezeigte Füllkörper 1 weist nur zwei Teilfüllkörper 2 und 3 auf, die mit äußeren Wandungsabschnitten 5 relativ geringer Dicke, inneren Wandungsabschnitten 6 relativ geringer Dicke und Wandungsabschnitten 9 und 9a relativ großer Dicke versehen sind. Die Gestaltung des einzelnen Teilfüllkörpers 2 bzw. 3 entspricht der Gestaltung des Teilfüllkörpers 3 bei der Ausführungsform nach den Figuren 1 und 2. Allerdings sind wiederum, bezogen auf die Ausführungsform nach den Figuren 3 und 4, die beiden Teilfüllkörper 2 und 3 so angeordnet, dass deren senkrecht angeordneten Achsen 7 und 8, die durch die Wandungsabschnitte 9 und 9a des jeweiligen Teilfüllkörpers 2 bzw. 3 verlaufen, unter einem Winkel von 45° geneigt zur Achse des Füllkörpers 1 verlaufen, die sich in Breitenerstreckung des Füllkörpers 1 erstreckt. Demzufolge überschneiden sich die Teilfüllkörper 2 und 3, bezogen auf die vertikale Flucht des Füllkörpers 1, wie es sich aus der Draufsicht der Figur 3 ergibt. Überdies ist eine Modifizierung des Teilfüllkörpers 3 gemäß der Ausführungsform nach den Figuren 3 und 4 gegenüber dem Teilfüllkörper 3 gemäß der Ausführungsform nach den Figuren 1 und 2 dahingehend gegeben, dass beim Teilfüllkörper 3 gemäß der Ausführungsform nach den Figuren 3 und 4 die jeweiligen oberen und unteren Streifen des Teilfüllkörpers 3 die inneren Wandungsabschnitte 6 und der mittlere Streifen die äußeren Wandungsabschnitte 5 darstellt bzw. darstellen.

Die äußeren Abmessungen des in den Figuren 1 und 2 gezeigten Füllkörpers 1 betragen, bezogen auf den umhüllenden Quader: L = 145 mm, B = 51 mm, H = 50 mm, bei einer Stärke der Wandungsabschnitte 5 bzw. 6 vom 0,4 mm.

Die abstrakte, tatsächliche Form des Füllkörpers 1 ist eine Überstruktur bestehend aus den drei Teilfüllkörpern 2, 3, 4, die als flache Zylinder ausgebildet sind. Die benachbarten Wandungsabschnitte 5 und 6 sind entgegengesetzt abwechselnd nach außen bzw. innen gebogen. Der jeweilige Wandungsabschnitt weist eine Länge von ungefähr 30 mm auf. Die Wandungsabschnitte 6, die nach innen gebogen sind, und zwar in der gleichen Bogenform, sind derart bemessen, dass zwei diagonal gegenüberliegende Bogenkuppen 18 mm bis 19 mm auseinander liegen (gemessen in Richtung der Flächennormalen). Die nach außen gebogenen Wandungsabschnitte 5 (gleichfalls mit einer Länge von ungefähr 30 mm und in der gleichen Bogenform) sind so bemessen, dass ein Abstand der Bogenkuppen der nach außen geformten Streifen zu den Bogenkuppen der nach innen geformten Streifen von 14,5 mm bis 16 mm resultiert (gemessen in Richtung der Flächennormalen). Zwischen zwei benachbarten Bögen verbleibt jeweils ein 5 mm bis 6 mm langer, leicht nach außen gewölbter Bereich.

Der veranschaulichte Füllkörper 1 weist ein

Verhältnis von $\dfrac{H}{\Phi} < 0{,}6$ auf mit

$$\Phi = \sqrt{\frac{L \cdot B}{\pi}} \cdot 2 \, .$$

L, B, H sind die aufeinander senkrecht stehenden Seitenlängen (L = Länge, B = Breite, H = Höhe) eines Quaders und damit die einfachste geometrische umhüllende Körperform, in die der Füllkörper hinein gesteckt werden kann. Ein solcher formaler Durchmesser errechnet sich somit über eine formale Gleichsetzung der größten Stirnfläche L · B eines umhüllenden Quaders mit einer Kreisfläche.

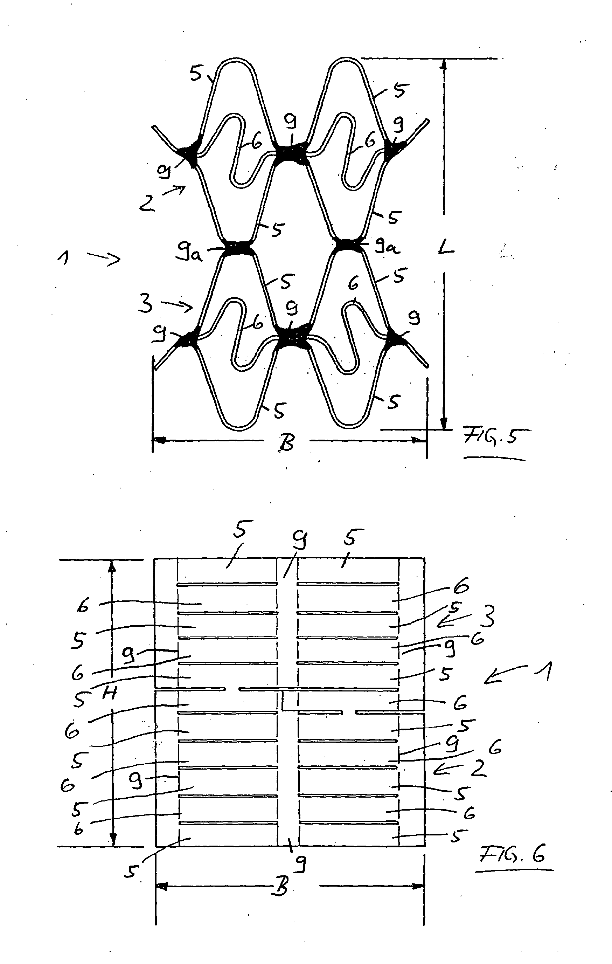

Auch bei der Beschreibung der dritten Ausführungsform gemäß der Figuren 5 und 6 werden entsprechende Bezugsziffern der Einfachheit halber verwendet.

Der dort dargestellte Füllkörper 1 besteht aus zwei identischen Teilfüllkörpern 2 und 3, wobei jeder Teilfüllkörper 2 bzw. 3 aus einer Vielzahl von wellenförmig angeordneten Streifenabschnitten besteht. Äußere Wandungsabschnitte relativ geringer Dicke 5 und innere Wandungsabschnitte 6 relativ geringer Dicke bilden diese Streifenabschnitte. Im Verbindungsbereich der Vertikalen dieser Wandungsabschnitte 5 und 6 des jeweiligen Teilfüllkörpers 2 bzw. der Wandungsabschnitte 5 im Verbindungsbereich benachbarter Teilfüllkörper 2 und 3 sind Wandungsabschnitte 9 bzw. 9a relativ großer Dicke gebildet, die sich über die Höhe des Füllkörpers 1 erstrecken. Der Teilfüllkörper 3 befindet sich hierbei auf einem höheren Niveau als der Teilfüllkörper 2.

Die Verbindung der Teilfüllkörper 2 und 3 erfolgt in den Scheitelbereichen zweier Paare von Wandungsabschnitten 5.

Die in den Figuren 1 bis 6 beschriebenen Füllkörper 1 können durchaus auch aus Metall oder Keramik bestehen.

**Patentansprüche**

1. Füllkörper (1) für den Stoff- und/oder Wärmeaustausch, insbesondere für Stoff- und/oder Wärmeaustauschkolonnen, die von einer Gas- und/oder Flüssigkeitsströmung durchsetzt werden, wobei der Füllkörper (1) eine Füllkörpereinheit ist, die durch eine Überstruktur aus mindestens zwei miteinander verbundenen Teilfüllkörpern (2, 3, 4) gebildet ist, sowie der Füllkörper (1) Wandungsabschnitte (5, 6; 9, 9a) unterschiedlicher Dikke aufweist.

2. Füllkörper nach Anspruch 1, wobei die Teilfüllkörper (2, 3, 4) auf unterschiedlichem oder demselben Höhenniveau nebeneinander angeordnet sind.

3. Füllkörper nach Anspruch 1 oder 2, wobei der Füllkörper (1) durch zwei oder drei Teilfüllkörper (2, 3; 2, 3, 4) gebildet ist, insbesondere durch zwei oder drei eine Ringstruktur aufweisende Teilfüllkörper (2, 3; 2, 3, 4) gebildet ist.

4. Füllkörper nach einem der Ansprüche 1 bis 3, wobei alle Teilfüllkörper (2, 3; 2, 3, 4) auf unterschiedlichem Höhenniveau angeordnet sind.

5. Füllkörper nach einem der Ansprüche 1 bis 4, wobei der Füllkörper (1) aus Metall, Keramik oder Kunststoff, insbesondere spritzfähigem oder extrusionsfähigem Kunststoff besteht.

6. Füllkörper nach einem der Ansprüche 1 bis 5, wobei der Füllkörper (1) durch zwei oder drei Teilfüllkörper (2, 3; 2, 3, 4) gebildet ist, insbesondere durch zwei oder drei, eine Ringstruktur aufweisende Teilfüllkörper (2, 3; 2, 3 4) gebildet ist, wobei alle Teilfüllkörper (2, 3; 2, 3, 4) auf unterschiedlichem Höhenniveau angeordnet sind.

7. Füllkörper nach einem der Ansprüche 1 bis 6, wobei

das Verhältnis $\dfrac{H}{\Phi}$ des durch die Teilfüllkörper (2, 3, 4) gebildeten Füllkörpers (1) < 0,6 beträgt, mit H = Höhe des Füllkörpers (1)

$$\Phi = \sqrt{\frac{L \cdot B}{\pi}} \cdot 2$$

L = Länge des Füllkörpers (1)

B = Breite des Füllkörpers (1)

8. Füllkörper nach einem der Ansprüche 1 bis 7, wobei vertikal benachbarte Wandungsabschnitte (5, 6) relativ geringer Dicke mittels Wandungsabschnitten (9) relativ großer Dicke miteinander verbunden sind.

9. Füllkörper nach einem der Ansprüche 1 bis 8, wobei benachbarte Teilfüllkörper (2, 3; 2, 3, 4) über einen Wandungsabschnitt (9a) relativ großer Dicke miteinander verbunden sind.

10. Füllkörper nach einem der Ansprüche 1 bis 9, wobei die Teilfüllkörper (2, 3, 4) nach außen gekrümmte Wandungsabschnitte (5) aufweisen und die Teilfüllkörper (2, 3, 4) im Bereich dieser Wandungsabschnitte miteinander verbunden sind.

11. Füllkörper nach einem der Ansprüche 1 bis 10, wobei der Füllkörper (1) mindestens eine Symmetrieachse, insbesondere zwei Symmetrieachsen (7, 8) aufweist, wobei der Füllkörper (1) im Bereich der Symmetrieachse (7, 8) die relativ dickeren Wandungsabschnitte (9, 9a) aufweist.

12. Füllkörper nach einem der Ansprüche 1 bis 11, wobei der jeweilige Teilfüllkörper (2 bzw. 3 bzw. 4), bezogen auf seine Höhenerstreckung (H) mehrere übereinander angeordnete unterschiedlich ausgebogene Wandungsabschnitte (5, 6) aufweist, wobei die Wandungsabschnitte (5, 6) in deren seitlichen Verbindungsbereichen die relativ dickeren Wandungsabschnitte (9, 9a) aufweisen.

13. Füllkörper nach einem der Ansprüche 1 bis 12, wobei die Teilfüllkörper (2, 3; 2, 3, 4) identisch ausgebildet sind.

FIG. 1

FIG. 2

FIG.3

FIG.4

FIG. 5

FIG. 6

**Europäisches Patentamt**

**EUROPÄISCHER RECHERCHENBERICHT**

Nummer der Anmeldung

EP 06 02 4922

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 697 246 A2 (JAEGER PRODUCTS INC [US] JAEGER PRODUCTS INC) 21. Februar 1996 (1996-02-21) * Spalte 13, Zeile 35 - Spalte 14, Zeile 46 * * Spalte 15, Zeile 7 - Zeile 24 * * Abbildungen 14-21 * ----- | 1-6,8, 11-13 | INV. B01J19/30 |
| X | EP 1 586 375 A1 (VER FUELLKOERPER FAB [DE]) 19. Oktober 2005 (2005-10-19) * Absatz [0008] - Absatz [0012] * * Absatz [0021] - Absatz [0023]; Abbildungen 1-4 * ----- | 1-6,11 | |
| X | EP 1 362 636 A (MONTZ GMBH JULIUS [DE]) 19. November 2003 (2003-11-19) * Absatz [0007] - Absatz [0011] * ----- | 1-6 | |
| X | EP 1 057 528 A (PETRILLO GIACINTO [IT]; PETRILLO GIOVANNI LUCA [IT]; PETRILLO MATTIA R) 6. Dezember 2000 (2000-12-06) * das ganze Dokument * ----- | 1-6,8,9, 11,13 | RECHERCHIERTE SACHGEBIETE (IPC) B01J |

Der vorliegende Recherchenbericht wurde für alle Patentansprüche erstellt

| Recherchenort | Abschlußdatum der Recherche | Prüfer |
|---|---|---|
| Den Haag | 14. Mai 2007 | Vlassis, Maria |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 02 4922

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2007

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0697246 | A2 | 21-02-1996 | AT | 177662 | T | 15-04-1999 |
| | | | DE | 69508324 | D1 | 22-04-1999 |
| | | | DE | 69508324 | T2 | 15-07-1999 |
| | | | DK | 697246 | T3 | 27-09-1999 |
| | | | ES | 2128657 | T3 | 16-05-1999 |
| | | | GR | 3029976 | T3 | 30-07-1999 |
| | | | JP | 3687922 | B2 | 24-08-2005 |
| | | | JP | 8057301 | A | 05-03-1996 |
| EP 1586375 | A1 | 19-10-2005 | KEINE | | | |
| EP 1362636 | A | 19-11-2003 | DE | 10221761 | A1 | 27-11-2003 |
| | | | US | 2004031584 | A1 | 19-02-2004 |
| EP 1057528 | A | 06-12-2000 | IT | MI991236 | A1 | 04-12-2000 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 853159 C
- EP 0143902 A1
- US 4575435 A
- DE 1129931 B
- US 4303599 A
- DE 29512080 U1
- EP 0764462 B1
- US 4041113 A
- US 4576763 A
- US 5411681 A
- US 4105724 A
- EP 0697246 B1
- WO 0240148 A2
- DE 19715704 C2

### In der Beschreibung aufgeführte Nicht-Patentliteratur

- *Chem Technol Biotechnol,* 2003, vol. 78, 142-145, www.paper.edu.cn